# EUROPEAN PATENT APPLICATION

(11) **EP 3 053 451 A1**
(43) Date of publication of application: **10.08.2016**
(21) Application number: 14869492.0
(22) Date of filing: 11.11.2014
(51) Int. Cl.: A23K 50/00, A01K 29/00

(54) **EDIBLE MONOFILAMENT AND DENTAL CARE MATERIAL FOR PET PRODUCED USING SAID EDIBLE MONOFILAMENT**

(30) Priority: 09.12.2013 JP 2013254228
(71) Applicant: Marukan Co., Ltd., Osaka-shi, Osaka 532-0011 (JP)
(72) Inventor: MATSUMOTO, Yukihiko, Osaka-shi Osaka 546-0032 (JP)
(74) Representative: Müller-Boré & Partner Patentanwälte PartG mbB
(86) International application number: PCT/JP2014/079787
(87) International publication number: WO 2015/087647

(57) **Abstract**

An aspect of the invention is directed to an edible monofilament for use in producing a dental care product for pets, wherein the monofilament has a linear diameter of from 0.3 to 4.0 mm, and an elastic strain of from 20 to 250 %, the elastic strain representing elongation of the monofilament when the monofilament is pull in a length direction thereof.

## Description

### TECHNICAL FIELD

The present invention relates to an edible monofilament, and a dental care product for pets produced by using the edible monofilament.

### BACKGROUND ART

Heretofore, various products such as pet foods to be given to pets such as dogs and cats have been sold in the market. These products are selected according to e.g. the types or ages of pets. Further, in recent years, soft products are tended to be preferred among the products.

However, when such soft products are given to pets, dental plaque may deposit on the teeth of pets. The deposited dental plaque may cause dental problems such as bad breath, gingivitis, or periodontal diseases. In view of the above, dental care products for pets for removing dental plaque are proposed.

Patent Literature 1 proposes a pet chew such as a braided member of animal skin such as dermis. Patent Literature 2 proposes a dental care product obtained by braiding a casing material in such a manner that the braided part remains entwined. The casing material includes a braided part (braided member). When such pet chews or dental care products are chewed by pets, the teeth of pets go in and out of the braided part of the braid member or the gaps between the strands of the casing material. When the chews are chewed by pets, the teeth of the pets including the roots of teeth are appropriately rubbed by the braided member or the casing material. Thus, it is possible to remove dental plaque until the roots of teeth.

### CITATION LIST

### PATENT LITERATURE

Patent Literature 1: Japanese Unexamined Patent Publication No. 2013-74817
Patent Literature 2: Japanese Patent No. 3,776,938

### SUMMARY OF INVENTION

An aspect of the invention is directed to an edible monofilament for use in producing a dental care product for pets, wherein the edible monofilament has a linear diameter of from 0.3 to 4.0 mm, and has an elastic strain of from 20 to 250 %, the elastic strain representing elongation of the monofilament when the monofilament is pull in a length direction thereof.

These and other objects, features and advantages of the invention will become more apparent upon reading the following detailed description along with the accompanying drawings.

### BRIEF DESCRIPTION OF DRAWINGS

FIGS. 1A and 1B are schematic diagrams illustrating a monofilament as an embodiment of the invention, wherein FIG. 1A is a perspective view of the monofilament, and FIG. 1B is a radial sectional view of the monofilament;
FIG. 2 is a schematic view of a single screw extruder to be used in the embodiment of the invention;
FIG. 3 is a schematic diagram describing a configuration of a dental care product in the embodiment of the invention;
FIGS. 4A to 4D are schematic diagrams describing how a tooth of a pet goes in and out of an insertion hole of the dental care product in the embodiment of the invention, wherein FIG. 4A is a schematic diagram illustrating a state before the tooth goes into the hole, FIG. 4B is a schematic diagram illustrating a state that the tooth goes into the hole, FIG. 4C is a schematic diagram illustrating a state that the tooth is coming out of the hole, and FIG. 4D is a schematic diagram illustrating a state that the tooth comes out of the hole;
FIG. 5 is a schematic diagram describing how a tooth in an insertion hole of a conventional dental care product comes out of the hole;
FIG. 6 is a photograph illustrating a state of insertion holes after the teeth come out of the holes in the dental care product in the embodiment of the invention;
FIG. 7 is a schematic diagram of a sheet-like dental care product produced by braiding monofilaments into meshes in the embodiment of the invention;
FIG. 8 is a schematic diagram of a dental care product produced by stranding a bundle of monofilaments in the embodiment of the invention;
FIG. 9 is a schematic diagram of a dental care product produced by bundling monofilaments in the embodiment of the invention;
FIG. 10 is a schematic diagram of a dental care product in which monofilaments are adhesively fixed to each other in the embodiment of the invention;
FIG. 11 is a schematic diagram illustrating an example of a nozzle unit installed in an ejection unit of the single screw extruder illustrated in FIG. 2;
FIG. 12 is a photograph for describing a state of a conventional dental care product after a tooth goes into an insertion hole; and
FIG. 13 is a photograph for describing a state that a tooth goes into an insertion hole of a conventional dental care product.

### DESCRIPTION OF EMBODIMENT

As a result of a study, the inventor found that conventional chews such as the chews proposed in Patent Literature 1 and in Patent Literature 2 are likely to harm the gums when the chews reach the roots of teeth and abut against the gums, because the chews are formed to have a certain hardness in order to retain the shape thereof. Further, the inventor found, as a result of a study, with use of the conventional chews such as the chews proposed in Patent Literature 1 and in Patent Literature 2, it may be impossible to sufficiently remove dental plaque from pets.

An object of the invention is to provide an edible monofilament for use in producing a dental care product for pets, which can sufficiently remove dental plaque in a wide oral cavity region with no or less harm of the gums of the pets, and a dental care product produced by using the edible monofilament.

The inventor investigated the reasons why the conventional chews may harm the gums or cannot sufficiently remove dental plaque. As a result of the investigation, the inventor found that these drawbacks result from inappropriate physical properties of a braided member composing these chews.

Specifically, the braided member composing the chews described in Patent Literature 1 and in Patent Literature 2 lacks sufficient elasticity and is hard. As a result, when the braided member is chewed by pets, the braided member may harm the gums of the pets.

Further, when the teeth of pets go into the gaps between the strands of the braided member such as the braided part of the chews, the teeth are rubbed by the braided member while expanding the gaps. When the state of use of these chews is observed, the braided member is not deformed to follow the whole contour of an inserted tooth. As a result, only a part of the surface of the tooth is rubbed by the braided member, and it may be difficult to uniformly remove dental plaque. Further, the gap expanded by insertion of a tooth is not restored to the original size after the tooth comes out of the gap. As a result, the braided member is not restored to follow the contour of the surface of the tooth when the tooth comes out of the gap, and it may be difficult for the braided member to sufficiently rub the surface of the tooth. As described above, it may be difficult for the conventional chews to sufficiently remove dental plaque.

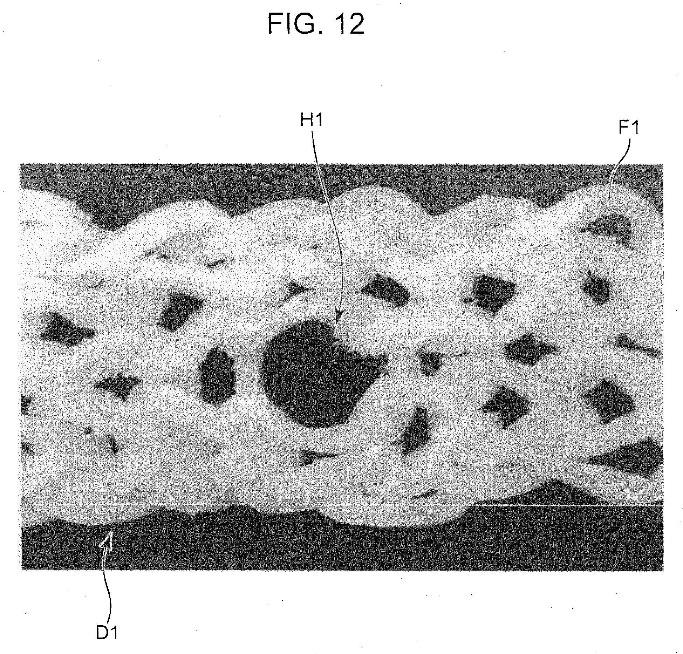

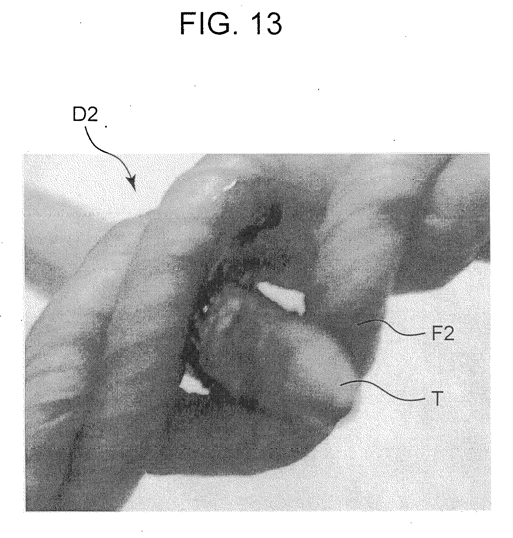

FIG. 12 is a photograph for describing a state of a conventional dental care product D1 after a tooth goes into an insertion hole. As illustrated in FIG. 12, the gap (insertion hole H1) in which the tooth is inserted is widely opened, and is not restored to the original size. As a result, the surface of the tooth may not be rubbed when the tooth comes out of the insertion hole H1, and dental plaque may not be sufficiently removed. Further, FIG. 13 is a photograph for describing a state that a tooth goes into an insertion hole in a conventional dental care product D2. In FIG. 13, to simplify the illustration, a jig T having substantially the same shape as the shape of a tooth is used, in place of the tooth. As illustrated in FIG. 13, due to an insufficient elasticity of the conventional dental care product D2, when the jig (tooth) goes into a gap, the gap is not deformed to follow the contour of the surface of the jig (tooth). Specifically, although a part of the surface of the jig T is in contact with a braided member F2, the other part of the surface of the jig T is not in contact with the braided member F2. Therefore, only a part of the surface of the jig T (tooth) is rubbed by the braided member F2, and dental plaque may remain unremoved.

As a result of an intensive research, the inventor found that a dental care product produced by using an edible monofilament, in which the elastic strain is in a specific range, can sufficiently remove dental plaque with no or less harm of the gums of pets, and achieved the invention as described below.

### <Edible monofilament>

In the following, an exemplary embodiment of the inventive monofilament is described. The monofilament in the embodiment is a monofilament for use in producing a dental care product, and has the following physical properties. It should be noted that the physical properties of the monofilament may vary immediately after production and after an elapse of a certain period of time after production. In view of the above, in the present specification, the physical properties to be described below are physical properties when the properties of the monofilament are stable. The expression "the properties are stable" indicates that the numerical values of physical properties of a monofilament produced by the below-mentioned monofilament production method, which are measured after the monofilament is wound into a tubular structure such as a bobbin, packed by a gas-barrier package (a package made of e.g. aluminum or nylon), and stored for one week lie within ±20 % with respect to the numerical values of physical properties measured after storage for two to three days. Preferred compositions which allow the monofilament to exhibit these physical properties will be described later. Further, in the present specification, a dental care product is an edible product having advantageous effects of removing dental plaque from pets, or keeping the oral cavity environment clean such as preventing dental plaque deposition. The edible product includes e.g. pet foods and pet treats. In the present specification, pet foods are products given to pets as meals. Pet treats are products (snacks), which are given to pets in training or given to pets as treats, other than pet foods. The pets are not specifically limited, and may include pet animals such as dogs, cats, rabbits, and hamsters; domestic animals such as cows/oxen, horses, and pigs; and animals in animal rearing facilities such as zoos. It is possible to give the monofilament in the embodiment as an edible product to these pets. In the embodiment, a monofilament composing a dental care product to be given to dogs, as one of the familiar pet animals, is described as an example.

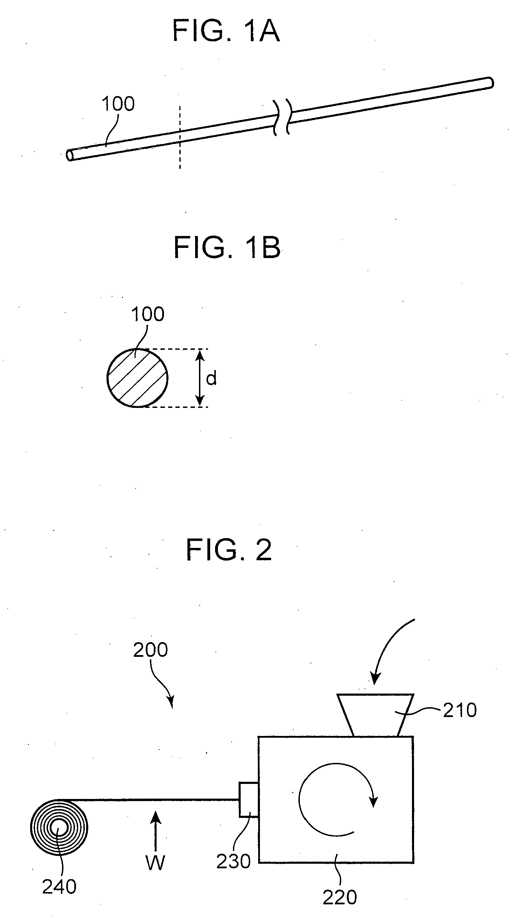

FIGS. 1A and 1B are schematic diagrams describing a monofilaments 100 in the embodiment. FIG. 1A is a perspective view of the monofilament 100, and FIG. 1B is a radial sectional view of the monofilament 100. The monofilament in the embodiment is in the form of a yarn, and has a substantially round shape in radial section.

### (Linear diameter)

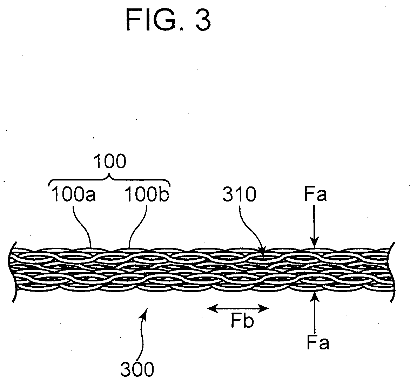

The linear diameter d of the monofilament 100 in the embodiment is from 0.3 to 4.0 mm. The linear diameter d is preferably from 0.5 to 1.5 mm, more preferably not smaller than 0.75 mm but smaller than 1.0 mm, and furthermore preferably from 0.75 to 0.95 mm. When the linear diameter d is smaller than 0.3 mm, a dental care product (see FIG. 3) produced by using the monofilament 100 is likely to be ruptured when chewed by pets. When the linear diameter d exceeds 4.0 mm, the monofilament 100 tends to be hard, and it is difficult to produce a dental care product.

Further, as described above, the lower limit of the linear diameter of the monofilament in the embodiment is 0.3 mm, which is smaller than the linear diameter of a conventional monofilament. Therefore, the dental care product produced by using the monofilament is advantageous in forming a small gap between the strands of the monofilament, as compared with the conventional art. Thus, the dental care product is easily applicable to pets whose teeth are small (such as small sized dogs or puppies). Further, since the monofilament has a small linear diameter, the monofilament easily reaches the roots of teeth or the gaps between the teeth when chewed by pets. This is advantageous in removing dental plaque.

The method for measuring the linear diameter of the monofilament is not specifically limited. It is possible to calculate a linear diameter by unwinding and cutting a roll of monofilament packed in a package and stored for one week as described above into a predetermined length, and by measuring the diameter of a section of the obtained sample cut with use of a pair of vernier calipers (SR-44 by Mitsutoyo). For instance, it is possible to calculate a linear diameter by preparing five samples and by obtaining an average of the linear diameters of the monofilaments.

### (Elastic strain)

The elastic strain of the monofilament in the embodiment is from 20 to 250 %. The elastic strain is preferably from 50 to 250 %, and more preferably from 100 to 150 %. When the elastic strain is smaller than 20 %, a dental care product produced by using the monofilament is such that it is difficult to restore the monofilament after the dental care product is chewed by pets, or the dental care product is likely to be ruptured. It should be noted that it is difficult to product a monofilament whose elastic strain exceeds 250 % by a production facility e.g. an extruder. Further, it is difficult for pets to chew and swallow the dental care product using the monofilament.

The method for measuring the elastic strain of the monofilament is not specifically limited. It is possible to measure an elastic strain by e.g. using a universal material testing machine (Instron 5581 by Instron Japan Co., Ltd.). Specifically, it is possible to calculate an elastic strain by unwinding and cutting a roll of monofilament packed in a package and stored for one week into a predetermined length as described above, and by measuring an elastic strain of the obtained sample having the predetermined length with use of a universal material testing machine. For instance, it is possible to calculate an elastic strain by preparing five samples and by obtaining an average of elastic strains of the monofilaments. With use of a universal material testing machine, it is possible to calculate a maximum strain (%) by combining a strain in an elastic region of the monofilament and a strain in a plastic region of the monofilament. In the present specification, the maximum strain (%) is handled as an elastic strain.

As described above, the conventional well-known dental care product does not have a sufficient elasticity and is hard. This may harm the gums. Further, the dental care product produced by using the monofilament may fail to sufficiently remove dental plaque (see FIG. 12 and FIG. 13).

However, the monofilament in the embodiment is soft and is less likely to harm the gums, because the elastic strain is from 20 to 250 %. Further, since the monofilament has the elastic strain in the aforementioned range, the monofilament is stretched when the teeth go into the gaps between the strands of the monofilament. Thereafter, when the teeth come out of the gaps, the monofilament is restored to the original size. Thus, the surfaces of the teeth which go in and out of the gaps defined by the strands of the monofilament are rubbed when the monofilament defining the gaps is stretched to follow the movement of the teeth. This makes it possible to sufficiently remove dental plaque.

Further, the monofilament in the embodiment is not brittle regardless that the linear diameter is from 0.3 to 4.0 mm, and is soft because of the elastic strain of from 20 to 250 %. Therefore, it is possible to produce a dental care product to be described later by using the monofilament on the basis of a variety of methods (such as knitting, braiding, or twisting). This is advantageous in enhancing the feasibility in production.

Next, preferred physical properties among the physical properties of the embodiment other than the above are described.

### (Tensile strength)

Preferably, the monofilament in the embodiment has a tensile strength of from 2 to 50 MPa in the length direction thereof. More preferably, the tensile strength is from 2.5 to 20 MPa. Generally, when the teeth of pets go into the gaps between the strands of a monofilament in chewing a dental care product, the monofilament is stretched at a relatively high speed, and a large load is likely to be applied to the monofilament. However, in the monofilament in the embodiment, as far as the tensile strength is not smaller than 2 MPa, the monofilament is less likely to be ruptured even if the monofilament is instantaneously and rapidly stretched when the teeth go into the gaps between the strands of the monofilament. Therefore, the monofilament is less likely to be ruptured even if a dental care product using the monofilament is repeatedly used. This makes it possible to use the dental care product for a long period of time. Further, as far as the tensile strength is not larger than 50 MPa, a dental care product using the monofilament is appropriately stretched when pets chew the dental care product with a normal chewing force, and the teeth easily go into the gap between the strands of the monofilament.

The method for measuring the tensile strength is not specifically limited. It is possible to measure a tensile strength by sampling monofilaments with use of the same method as the aforementioned method for measuring an elastic strain, using a universal material testing machine (Instron 5581 by Instron Japan Co., Ltd.).

### (Dental score)

It is preferable for the monofilament in the embodiment to have a dental score of not smaller than 500 MPa*%, wherein the dental score is obtained by multiplying an elastic strain with a tensile strength. The dental score is more preferably not smaller than 700 MPa*%, furthermore preferably not smaller than 1,000 MPa*%, and particularly preferably not smaller than 1,200 MPa*%. The dental score is a parameter which reflects balance between the elastic strain and the tensile strength of the monofilament. As far as the dental score of the monofilament in the embodiment is not smaller than 500 MPa*%, it is judged that the monofilament has good balance between the elastic strain and the tensile strength. Thus, the dental care product produced by using the monofilament is such that it is less likely to harm the gums of pets, and it is possible to rub the surfaces of teeth by contact therewith not only when the teeth go into the gaps but also when the teeth come out of the gaps. This is advantageous in removing dental plaque.

The upper limit of the dental score is not specifically limited. However, when the dental score of the monofilament is from 1,200 to 1,300 MPa*%, the monofilament is particularly less likely to harm the gums of pets, and the monofilament can rub the surfaces of teeth while deforming to follow the movement of the teeth not only when the teeth go into the gaps but also when the teeth come out of the gaps. Thus, the aforementioned configuration is particularly advantageous in removing dental plaque.

### (Dynamic viscoelasticity)

Regarding the dynamic viscoelasticity of the monofilament in the embodiment, it is preferable for the monofilament to have a storage modulus (E') of from 1 X 10⁷ to 1.2 X 10⁸ Pa. E' is more preferably from 1.2 X 10⁷ to 1 X 10⁸ Pa, and furthermore preferably from 1.5 X 10⁷ to 8 X 10⁷ Pa. It is preferable for the monofilament to have a loss tangent (tanδ: loss modulus E"/storage modulus E') of from 0.3 to 1. Tanδ is more preferably from 0.4 to 1, and furthermore preferably from 0.5 to 1. When the monofilament is such that E' is from 1 X 10⁷ to 1.2 X 10⁸ Pa, and tanδ is from 0.3 to 1, the monofilament is easily and elastically deformed in such a manner that the surfaces of teeth are uniformly rubbed not only when the teeth go into the gaps between the strands of the monofilament but also when the teeth come out of the gaps. Thus, the monofilament provides advantageous effects of removing dental plaque.

The method for measuring the dynamic viscoelasticity is not specifically limited. It is possible to measure a dynamic viscoelasticity by a dynamic viscoelasticity measuring apparatus (DMS6100 by Seiko Instrument Inc.). Regarding the measurement conditions, it is possible to employ the frequency: 10 Hz, the sample length: 10 mm, the temperature increasing rate: 2 °C/min, and the measurement temperature range: 20 to 70 °C. Specifically, it is possible to calculate a dynamic viscoelasticity by unwinding and cutting a roll of monofilament packed in a package and stored for one week as described above into a predetermined length, and by measuring a dynamic viscoelasticity of the obtained sample having the predetermined length with use of a dynamic viscoelasticity measuring apparatus. For instance, it is possible to calculate a dynamic viscoelasticity by preparing five samples, and by obtaining an average of dynamic viscoelasticities of the monofilaments.

### (Stress relaxation)

It is preferable for the monofilament in the embodiment to have a stress relaxation τ of from 2 to 120 seconds. The stress relaxation τ is more preferably from 5 to 60 seconds, and furthermore preferably from 10 to 45 seconds. The stress relaxation indicates a velocity at which molecules composing an object migrate when a stress is applied to the object and then is released. When the stress relaxation τ is from 2 to 120 seconds, for instance, even when the monofilament is deformed as a result of insertion of teeth into the gaps between the strands of the monofilament, it can be said that the time required for the monofilament to restore its shape is short. Therefore, the monofilament can uniformly rub the surfaces of teeth not only when the teeth go into the gaps between the strands of the monofilament but also when the teeth come out of the gaps. Thus, the monofilament provides advantageous effects of removing dental plaque.

The method for measuring the stress relaxation τ is not specifically limited. It is possible to measure a stress relaxation by using a universal material testing machine (AGI by Shimadzu Corporation). Regarding the measurement conditions, it is possible to employ the sample length: 10 mm, and the load: 5 kN. Specifically, it is possible to calculate a stress relaxation by unwinding and cutting a roll of monofilament packed in a package and stored for one week as described above into a predetermined length, and by measuring a stress relaxation of the obtained sample having the predetermined length with use of a universal material testing machine. For instance, it is possible to calculate a stress relaxation by preparing five samples, and by obtaining an average of stress relaxations of the monofilaments.

### (Sectional shape)

In the embodiment, the sectional shape of the monofilament is a circular shape (see FIG. 1B). The sectional shape of the monofilament is not specifically limited. It is possible to employ various shapes such as a wedge shape, a prismatic shape, or an oval shape, as necessary. For instance, when a prismatic shape in which the linear diameter is not constant is employed, the maximum diameter in section is employed as the linear diameter. Specifically, when the sectional shape of the monofilament is an oval shape, the linear diameter is the major diameter of the oval shape.

Next, the composition of the monofilament in the embodiment is described. As far as the linear diameter and the elastic strain of the obtained monofilament in the embodiment satisfy the aforementioned ranges, the composition of the monofilament in the embodiment is not specifically limited. Therefore, it is possible to use the conventional well-known raw materials for the composition of the monofilament, as necessary.

### (Glycerin)

It is preferable for the monofilament to contain glycerin of from 0.3 to 40 % by mass. The content of glycerin is preferably from 5 to 40 % by mass, more preferably from 5 to 30 % by mass, and furthermore preferably from 10 to 25 % by mass. The monofilament containing glycerin of from 0.3 to 40 % by mass is advantageous in that it is easy to process the monofilament to have the linear diameter in the aforementioned range, and it is easy to allow the monofilament to exhibit the elastic strain in the aforementioned range.

The method for adding glycerin is not specifically limited. For instance, it is possible to add glycerin by mixing with other raw materials. It is also possible to prepare an intermediate product of a monofilament by using raw materials other than glycerin, and to impregnate the obtained intermediate product in glycerin. Among the various methods, it is preferable to add glycerin by mixing with other raw materials. The monofilament obtained by the aforementioned method is such that glycerin uniformly exists not only on the surface of the monofilament but also inside the monofilament. As compared with a case, in which glycerin exists only in the vicinity of the surface of a monofilament by impregnation, glycerin is less likely to be lost with time. As a result, the physical properties of the monofilament such as an elastic strain are less likely to vary with time.

### (Gelatin)

It is preferable for the monofilament to contain gelatin of from 5 to 80 % by mass. The content of gelatin is preferably from 20 to 70 % by mass, and more preferably from 40 to 60 % by mass. The monofilament containing gelatin of from 5 to 80 % by mass is advantageous in that it is easy to process the monofilament to have the linear diameter in the aforementioned range, and it is easy to allow the monofilament to exhibit the elastic strain in the aforementioned range.

The kind of gelatin is not specifically limited. It is possible to use gelatin contained in low molecular weight collagen, partially hydrolyzed collagen, collagen peptide, or soluble collagen.

### (Starch)

It is preferable for the monofilament to contain starch of from 5 to 50 % by mass. The content of starch is preferably from 5 to 40 % by mass, and more preferably from 5 to 20 % by mass. The monofilament containing starch of from 5 to 50 % by mass is advantageous in that it is easy to process the monofilament to have the linear diameter in the aforementioned range, and it is easy to allow the monofilament to exhibit an appropriate elastic strain or tensile strength in the aforementioned range.

The kind of starch is not specifically limited. It is possible to use various degradation products of natural starch such as oxidized starch and low viscosity modified starch; various alpha starches; various derivatives such as starch ester, starch ether, and cross-linked starch; and natural starch such as amylose (e.g. high amylose starch), corn starch such as waxy corn starch, and amylopectin. Further, starch includes tapioca starch and derivatives thereof.

### (Water content)

It is preferable for the monofilament in the embodiment to contain water content of from 5 to 40 % by mass. The water content is preferably from 8 to 35 % by mass, and more preferably from 10 to 30 % by mass. The monofilament containing water content of from 5 to 40 % by mass is advantageous in that it is easy to mix the other raw materials such as starch and gelatin. Spreading and swelling of these raw materials progress, and a homogeneous mixture is obtained. Thus, it is easy to process the monofilament to have the linear diameter in the aforementioned range, and it is easy to allow the monofilament to exhibit the elastic strain in the aforementioned range.

Further, it is possible to produce a dental care product containing water content of from 15 to 25 % by mass from the monofilament containing glycerin, gelatin, and water content as described above. The obtained dental care product containing water content in the aforementioned range is relatively soft, is less likely to be ruptured when chewed by pets, and is less likely to harm the gums of pets.

It is possible to add protein and additives in the monofilament in the embodiment, as necessary, in addition to the aforementioned ingredients. Examples of the protein include casein sodium, soybean protein, wheat gluten protein, corn zein protein, and dried collagen. It is possible to use these proteins as a substitute of gelatin. Examples of the additives include meat such as animal meat and fish meat; other extracts; sugars; seasonings such as sodium glutamate; fats from seasoning oils; cheese such as strong cheese; palatable agents such as milk, food coloring agents such as astaxanthin, carotene, and anthocyanin; and functional ingredients such as glucosamine, chondroitine sulfate, geraniol, lutein, phycoerythrin, spirulina, resveratrol, oligosaccharidyl ceramide, betaine, peptide, lecithin, oligofructose, raffinose, casein phosphopeptide (CPP), calcium apatite, glucosamine, polyglutamine, lignan, polyphenol, chlorophyll, Globigen, calcium apatite, and phosphorylated oligosaccharides calcium salt. Including these ingredients provides the monofilament with the advantageous effects such as anti obesity treatment, preventing bad breath, relieving knee joint paint, preventing skin diseases, antiallergy treatment, improvement on glossy coat, and improvement on biophylactic functions.

As described above, the monofilament in the embodiment has a linear diameter of from 0.3 to 4.0 mm. Therefore, the monofilament of such a small linear diameter easily reaches the roots of teeth or the gaps between the teeth when a dental care product produced by using the monofilament is chewed by pets. The monofilament is stretched by insertion of teeth into the gaps between the strands of the monofilament. However, since the elastic strain of the monofilament is from 20 to 250 %, it is possible to expand the gaps between the strands of the monofilament to follow the contour of teeth going into the gaps between the strands of the monofilament. Since the monofilament has the elastic strain in the aforementioned range, the monofilament is restored to the original size when the teeth come out of the gaps. Therefore, when the teeth come out of the gaps between the strands of the monofilament, the gaps are restored to the original size to follow the contour of the teeth coming out of the gaps. Thus, the monofilament defining the gaps can uniformly rub the surfaces of teeth while casing deformation to follow the contour of the teeth coming out of the gaps between the strands of the monofilament. This makes it possible to remove dental plaque. Further, since the elastic strain of the monofilament is from 20 to 250 %, the monofilament is soft, and is less likely to harm the gums.

### <Method for producing edible monofilament>

The following is an example of a method for producing the monofilament. It is possible to produce the monofilament by using e.g. an extruder. In the following description, a single screw extruder, which is an example of a continuous extruder, is used. FIG. 2 is a schematic diagram of a single screw extruder 200. The single screw extruder 200 is mainly provided with a feeder unit 210 for feeding raw materials, a screw unit 220 for mixing the raw materials, and an ejection unit 230 for ejecting the mixture of the raw materials as a monofilament 100. The ejected monofilament 100 is wound into a tubular structure 240.

First of all, the raw materials composing the monofilament 100 are put into the feeder unit 210, and stored in the screw unit 220. The raw materials are subjected to heating, compression, kneading, and orientation in the screw unit 220, and are melted each other into a homogeneous mixture. The barrel temperature of the screw unit 220 can be set to e.g. from 65 to 120 °C. The process time can be set to e.g. from 1 to 10 minutes. In the aforementioned conditions, the temperature of the mixture is adjusted to from about 50 to 90 °C. The raw materials are mixed by using e.g. a single screw, or a silent cutter or a ball cutter in which heat generation is small. Setting the temperature of the mixture to from about 50 to 95 °C makes it possible to prevent excessive modification of proteins in the mixture. Further, swelling of starch grains appropriately progresses, and starch grains are less likely to decompose. This makes it possible to prevent lowering of the viscosity and the fragility of tissues. Further, the mixture whose temperature is adjusted in the aforementioned temperature range is less likely to foam at the time of ejection to be described later, and has a high degree of transparency.

It takes a large scale facility and a large amount of time for mixing the raw materials in the screw unit if a method (wet spinning method), in which proteins are dissolved with use of an ample amount of water, followed by drying, is employed. In view of the above, it is preferable to employ a method (dry spinning method), in which proteins are dissolved with use of a minimum required amount of water, followed by spinning. The aforementioned method is advantageous in allowing an obtained monofilament to exhibit the elastic strain in the aforementioned range.

The obtained mixture is ejected in the form of filaments from the ejection unit 230. The diameter of the ejection holes of the ejection unit 230 is adjusted as necessary so that the linear diameter of the obtained monofilament 100 is from 0.3 to 4.0 mm. The ejected monofilament 100 is dried with air W for dehumidification as necessary to such an extent that the strands of the monofilament 100 do not adhere each other, and is wound into the tubular structure 240 such as a bobbin. It is preferable to wind the ejected monofilament 100 into the tubular structure 240 while pulling the ejected monofilament 100 by revolving the tubular structure 240 to such an extent that the linear diameter is adjusted in the range of from 0.3 to 4. 0 mm.

The monofilament in the embodiment can be produced by the aforementioned exemplary production method. The length of the obtained monofilament is e.g. 100 m or longer depending on the amount of raw materials or the linear diameter of the monofilament. The monofilament in the embodiment is stored as necessary, and then, is processed into a dental care product. In the embodiment, the monofilament is produced by using a single screw extruder. Alternatively, it is possible to use a bi-axial extruder or a twin-type extruder, in place of a single screw extruder. In this case, the rotational speed of the screw is appropriately adjusted to prevent application of an excessive shear force.

### <Dental care product for pets>

In the following, an embodiment of the inventive dental care product is described. FIG. 3 is a schematic diagram illustrating a configuration of a dental care product 300. The dental care product 300 is a dental care product produced by using the monofilament 100 described in the embodiment. The dental care product 300 is formed into a tubular shape by braiding the strands of the monofilament 100.

The number of monofilaments 100 composing the dental care product 300 is not specifically limited. As far as the number of monofilaments satisfies the number required for the dental care product 300 to be produced, it is possible to select the number of monofilaments as necessary depending on the shape or the size of the dental care product 300, or depending on e.g. a knitting method to be used in producing the dental care product 300. Specifically, the number of monofilaments 100 composing the dental care product 300 is one or more. It is possible to produce a colorful dental care product by using monofilaments of different colors colored by different colarants. Likewise, it is possible to produce a dental care product rich in a variety of nutrients, in addition to the colors, by using monofilaments of different colors and containing different nutrients. FIG. 3 illustrates a dental care product 300 composed of six monofilaments 100. Among the six monofilaments 100, four monofilaments (monofilaments 100a) contain lycopene and have a red color. Further, among the six monofilaments 100, two monofilaments (monofilaments 100b) contain lutein and have a yellow color. As a result, the dental care product 300 is colored in stripes by the monofilaments of two colors (monofilaments 100a and 100b).

Further, when a dental care product is produced by using monofilaments, the linear diameter of each of the monofilaments is from 0.3 to 4.0 mm, and the elastic strain of each of the monofilaments is from 20 to 250 %. In view of the above, the dental care product may be produced by using monofilaments having different linear diameters and different elastic strains, as far as the linear diameters or the elastic strains satisfy the aforementioned ranges. FIG. 3 illustrates a dental care product 300 produced by using monofilaments 100a whose linear diameter is 0.7 mm, and monofilaments 100b whose linear diameter is 1.0 mm.

Further, a dental care product may be produced by a mechanized production facility (e.g. an all-purpose braiding machine), or may be hand made. Specifically, as described above, a conventional monofilament is brittle because of a small linear diameter. As a result, it is difficult to produce a dental care product using the conventional monofilament without a special treatment such as impregnation in glycerin or water when the dental care product is produced not only by a mechanized production facility but also by hand made. However, the dental care product in the embodiment is produced by using a soft monofilament having an elastic strain of from 20 to 250 %. Therefore, it is possible to efficiently produce the dental care product in the embodiment by a mechanized production facility. Further, since the dental care product in the embodiment can be produced by a mechanized production facility, it is easy to make the dental care product long with less variation in quality.

Referring back to FIG. 3, the dental care product 300 is formed with multitudes of holes (insertion holes 310) between the monofilaments 100. When pets chew the dental care product 300, the teeth go in and out of the insertion holes 310.

Further, when the dental care product 300 is chewed by pets from above and from below, a compression stress Fa is radially and inwardly applied from the outside of the dental care product 300. Further, when the other end of the dental care product is chewed in a state that one end thereof is held by e.g. the forelegs of a pet, a tensile stress Fb is lengthwise applied to the dental care product. In both of the cases, the dental care product 300 is elastically deformed against the compression stress Fa and against the tensile stress Fb, because the monofilaments have an elastic strain of from 20 to 250 %. Therefore, the dental care product 300 is easily restored to the original shape, after the dental care product 300 is released from the compression stress Fa and from the tensile stress Fb. Specifically, even when a compression stress Fa of radially compressing the dental care product in the embodiment by 40 to 60 % is applied to the dental care product, or even when a tensile stress Fb of lengthwise pulling the dental care product by 10 to 20 % is applied to the dental care product, the dental care product has an elasticity of restoring to the original shape. Therefore, the dental care product 300 in the embodiment is easily restored to the original shape, even when the dental care product is repeatedly chewed and pulled by pets. Thus, it is possible to use the dental care product 300 for a long period of time.

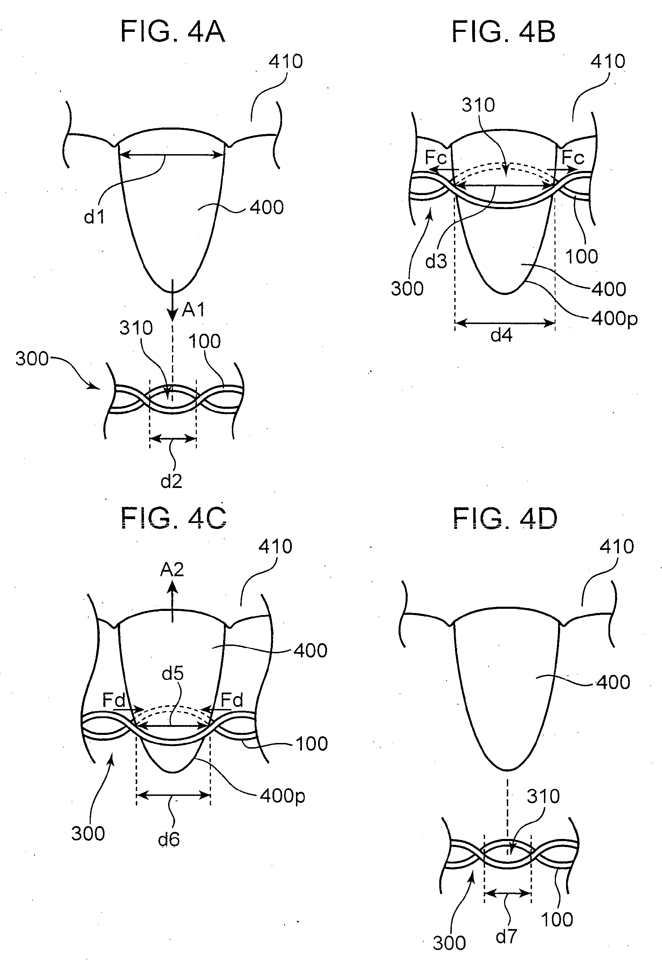

The following is a description about how the monofilaments are deformed when the dental care product is chewed by pets. FIGS. 4A to 4D are schematic diagrams describing how a tooth 400 of a pet goes in and out of an insertion hole 310 of a dental care product 300. FIG. 4A is a schematic diagram illustrating a state before the tooth 400 goes into the insertion hole 310. FIG. 4B is a schematic diagram illustrating a state that the tooth 400 goes into the insertion hole 310. FIG. 4C is a schematic diagram illustrating a state that the tooth 400 is coming out of the insertion hole 310. FIG. 4D is a schematic diagram illustrating a state that the tooth 400 comes out of the insertion hole 310.

As illustrated in FIG. 4A, in a state before the tooth 400 goes into the insertion hole 310 of the dental care product 300, the diameter d2 (e.g. from 2 to 3 mm) of the insertion hole 310 is smaller than the diameter d1 (the maximum diameter of the root of the tooth, e.g. 5 mm) of the tooth 400 of a pet. When the pet chews the dental care product 300, the tooth 400 moves in the direction of the arrow A1. Thus, the tooth 400 goes into the insertion hole 310.

As illustrated in FIG. 4B, when the tooth 400 goes into the insertion hole 310, the diameter of the insertion hole 310 increases depending on the diameter d3 of the inserted tooth 400. FIG. 4B illustrates the insertion hole 310 whose diameter increases to d4 (e.g. from 4 to 5 mm). The diameter d3 of the tooth 400 is substantially the same as the diameter d4 of the insertion hole 310. When the monofilament 100 is shifted from the state of FIG. 4A to the state of FIG. 4B, an outwardly acting stress Fc is applied to the monofilament 100 by the tooth 400 which moves relative to the monofilament 100 in such a manner as to increase the diameter of the insertion hole 310. Thus, the monofilament 100 rubs a surface 400p of the tooth 400 to thereby remove dental plaque. Further, the monofilament 100 is stretched by 50 to 60 % per unit length (1 cm) from a state that a load is not imparted before insertion of the tooth 400. However, since the monofilament 100 has an elastic strain of from 20 to 250 %, the monofilament 100 is stretched depending on the diameter of the tooth 400 without being ruptured even when stretched as described above. Further, the dental care product 300 as a whole is radially contracted by 2 to 10 % and lengthwise stretched by 20 to 25 % per unit length (1 cm) from a state that a load is not imparted before insertion of the tooth 400. For instance, after the tooth 400 sufficiently goes into the insertion hole 310 near gums 410, the tooth 400 comes out of the insertion hole 310.

As illustrated in FIG. 4C, when the tooth 400 moves in the direction of the arrow A2, and comes out of the insertion hole 310, the diameter of the insertion hole 310 decreases depending on the diameter of the tooth 400 coming out of the insertion hole 310. FIG. 4C illustrates the insertion hole 310, whose diameter decreases to the diameter d6, which is substantially the same as the diameter d5 of the tooth 400 coming out of the insertion hole 310. When the monofilament 100 is shifted from the state of FIG. 4B to the state of FIG. 4C, the monofilament 100 is deformed in such a manner as to restore the insertion hole 310 to the original size owing to the elasticity of the monofilament 100. At the time of deformation, a stress Fd is applied to the monofilament 100 in such a direction as to decrease the diameter of the insertion hole 310. Therefore, the monofilament 100 rubs the surface 400p of the tooth 400 which moves relative to the monofilament 100 to thereby remove dental plaque.

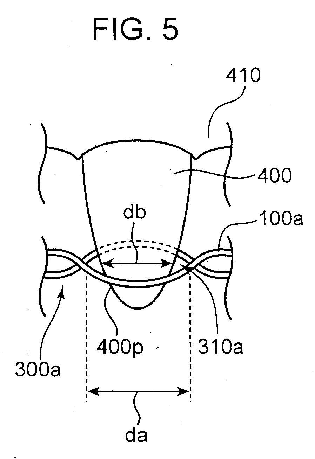

For reference, the following is a description about how a tooth comes out of an insertion hole of a conventional dental care product. FIG. 5 is a schematic diagram describing how a tooth 400 in an insertion hole 310a of a conventional dental care product 300a comes out of the insertion hole 310a. The conventional dental care product 300a is such that a monofilament 100a defining the insertion hole 310a is not restored to the original size, and is not deformed to follow the contour of the tooth 400 coming out of the insertion hole 310a after the monofilament 100a is stretched by insertion of the tooth 400 into the insertion hole 310a, followed by coming out of the tooth 400 from the insertion hole 310a, because the monofilament 100a does not have an elastic strain of the monofilament 100 composing the dental care product 300 in the embodiment. Therefore, the diameter of the insertion hole 310a whose diameter increases to the diameter da by insertion of the tooth 400 does not decrease to follow the diameter db of the tooth 400 after the tooth 400 comes out of the insertion hole 310a. Thus, a surface 400p of the tooth 400 coming out of the insertion hole 310a fails to come into contact with the monofilament 100a, and the conventional dental care product 300a cannot sufficiently remove dental plaque.

Referring back to the description about the dental care product 300 in the embodiment, as illustrated in FIG. 4D, when the tooth 400 completely comes out of the insertion hole 310, the diameter d7 of the insertion hole 310 returns to substantially the same size as before insertion of the tooth 400. Specifically, the diameter d7 of the insertion hole 310 after the tooth 400 comes out of the insertion hole 310 is substantially the same as the diameter d2 (see FIG. 4A) of the insertion hole 310 before insertion of the tooth 400.

As described above, the dental care product in the embodiment is deformed to follow the contour of the tooth not only when the tooth goes into the insertion hole but also when the tooth comes out of the insertion hole. Thus, the dental care product in the embodiment can uniformly rub the surface of the tooth, and remove dental plaque.

Preferably, the monofilament defining an insertion hole is instantaneously deformed to follow the contour of a tooth which goes in and out of the insertion hole. However, the speed at which the monofilament defining an insertion hole is deformed is not specifically limited. As far as it is possible to deform the monofilament to such an extent as to remove dental plaque from a tooth coming out of the insertion hole without instantaneously deforming to follow the contour of the tooth coming out of the insertion hole, any speed is applicable.

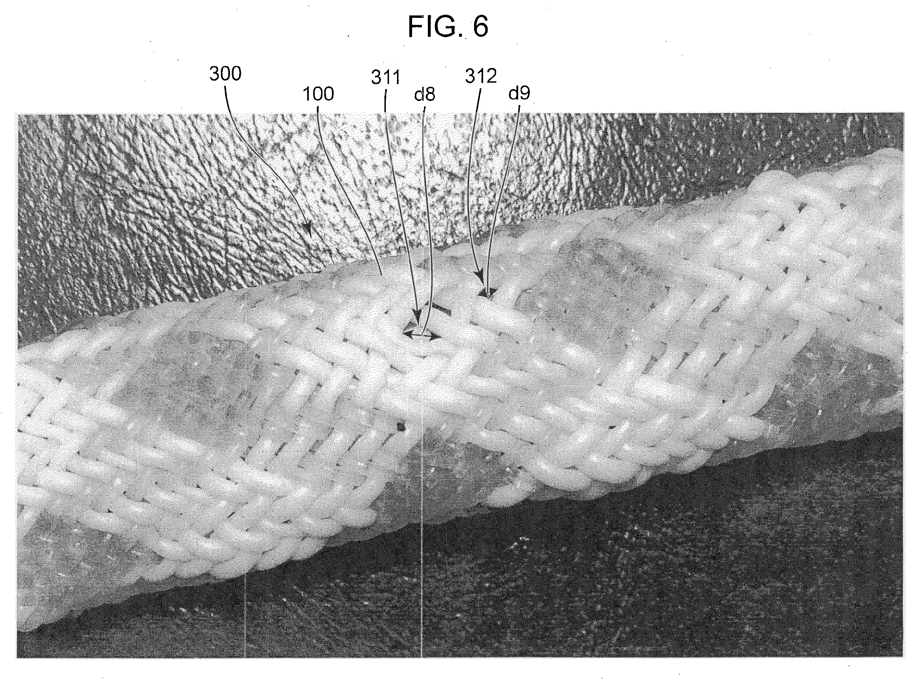

Further, in the embodiment, the diameter of an insertion hole after a tooth comes out of the insertion hole is substantially the same as the diameter of the insertion hole before the tooth goes into the insertion hole (see FIG. 4A and FIG. 4D). Alternatively, the diameter of an insertion hole after a tooth comes out of the insertion hole may be slightly larger than the diameter of the insertion hole before the tooth goes into the insertion hole. Specifically, as far as the monofilament can rub the surfaces of teeth including the roots of teeth and the gaps between the teeth, on which dental plaque is likely to deposit, when the teeth go in and out of the insertion holes, the diameter of the insertion hole is not specifically limited. An example of the diameter of the insertion hole after a tooth comes out of the insertion hole is 1.5 to 2.5 times of the diameter of the insertion hole before the tooth goes into the insertion hole, and is 0.3 to 0.5 time of the diameter of the tooth. As far as the diameter of the insertion hole after a tooth comes out of the insertion hole lies in the aforementioned range, it is possible to secure the effect of removing dental plaque from the roots of teeth and from the gaps between the teeth. FIG. 6 is a photograph illustrating a state of an insertion hole 311 after a tooth comes out of the insertion hole 311. In the dental care product 300 in the embodiment, the diameter d8 of the invention hole 311 after a tooth comes out of the insertion hole 311 is as large as about 2.5 times of the dimeter d9 of the insertion hole 312 before the tooth goes into the insertion hole 311. However, the diameter d8 is sufficiently smaller than the diameter d1 (see FIG. 4A) of the tooth. Therefore, even if the tooth goes into the insertion hole 311 again, the monofilament 100 defining the insertion hole 311 can uniformly rub the surface of the tooth and sufficiently remove dental plaque.

Further, in the embodiment, as illustrated in FIG. 3, the tubular-shaped dental care product 300 obtained by braiding the monofilaments 100 is described in details. Alternatively, the dental care product in the embodiment of another shape can also remove dental plaque without harming the gums of pets. Specifically, the method for producing the dental care product by using the monofilament is not specifically limited. It is possible to produce the dental care product by knitting, braiding, weaving, bundling or twisting the monofilaments. The method of knitting includes single crochet, double crochet, filet crochet, and net stitch. The method of braiding includes square braiding, flat braiding, and round braiding. The method of weaving includes plain weaving, twill weaving, and satin weaving. The method of twisting includes single twist, double twist, Koma twist, and sash twist. Further, it is possible to adhesively fix the monofilaments by fusion while changing the temperature condition at the time of production as necessary. Alternatively, the monofilaments may be bundled or formed into a non-woven member.

The shape of the dental care product produced by the aforementioned production methods is not specifically limited. The shape of the dental care product may include a variety of shapes such as a tubular shape, a sheet-like shape, a ball-like shape, and a rod-like shape.

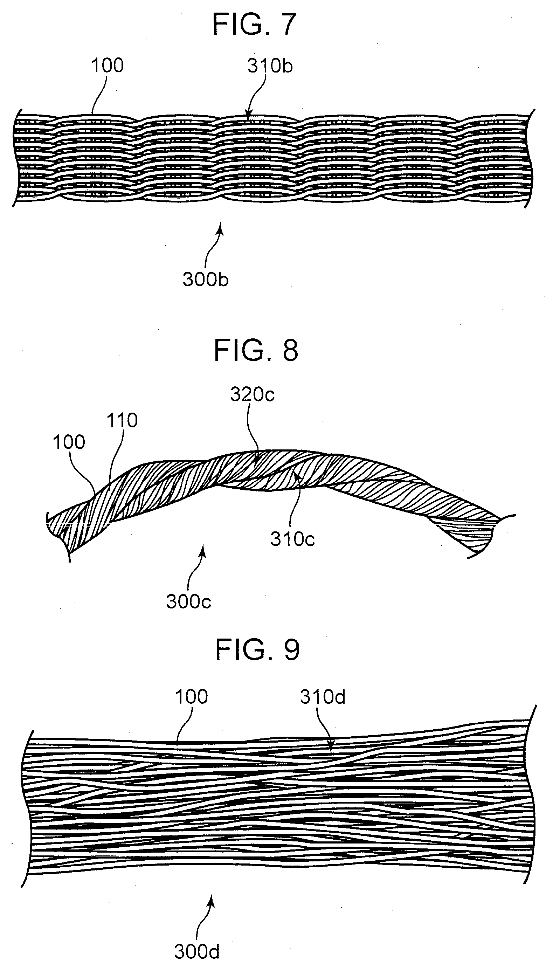

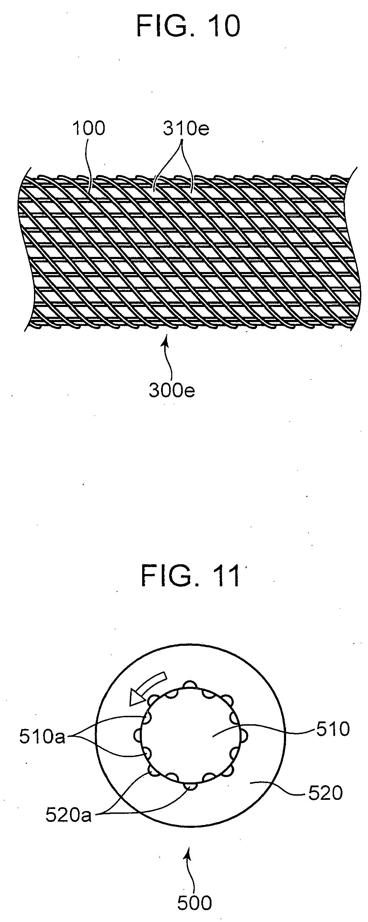

FIG. 7 is a schematic diagram of a sheet-like dental care product 300b produced by braiding the monofilaments 100 into meshes. The dental care product 300b has a flat shape. Therefore, it is easy for the teeth to simultaneously go into insertion holes 300b, and dental plaque is efficiently removed. FIG. 8 is a schematic diagram of a dental care product 300c produced by preparing filament bundles 110, each of which is obtained by bundling the monofilaments 100, and by twisting the filament bundles 110. With use of the dental care product 300c, the teeth not only go into insertion holes 310c formed between the filament bundles 110 but also go into insertion holes 320c formed between the monofilaments 100. The shape of the insertion hole 310c and the shape of the insertion hole 320c differ from each other. Therefore, it is easy to select an insertion hole of an appropriate shape depending on the size or the shape of the teeth of pets, and it is easy to remove dental plaque. FIG. 9 is a schematic diagram of a dental care product 300d produced by bundling the monofilaments 100. The dental care product 300d has insertion holes 310d of different sizes. This makes it easy to select an insertion hole of an appropriate size depending on the size or the shape of the teeth of pets, and it is easy to remove dental plaque. Further, it is possible to produce the dental care product 300d by thermally fusing the monofilaments 100 with each other. This makes it easy to adjust the diameter of the obtained dental care product 300d. This is advantageous in enhancing the feasibility in production. FIG. 10 is a schematic diagram of a dental care product 300e, in which the monofilaments 100 are adhesively fixed to each other. Since the monofilaments 100 of the dental care product 300e are adhered to each other, the size of an insertion hole 310e is set in advance. Setting the size of the insertion hole 310e depending on the size or the shape of the teeth of pets makes it easy to remove dental plaque. Further, it is possible to produce the dental care product 300e illustrated in FIG. 10 by installing a nozzle unit 500 illustrated in FIG. 11 in the ejection unit 230 of the single screw extruder 200 illustrated in FIG. 2. FIG. 11 is a schematic diagram illustrating an example of a nozzle unit installed in the ejection unit of the single screw extruder illustrated in FIG. 2. The nozzle unit 500 includes a cylindrical middle portion 510, and an annular portion 520 which is allowed to come into contact with the outer surface of the middle portion 510. Further, the middle portion 510 is formed with a plurality of ejection ports 510a in a surface thereof which comes into contact with the annular portion 520. Further, the annular portion 520 is formed with a plurality of ejection ports 520a in a surface thereof which comes into contact with the middle portion 510. The middle portion 510 has its position fixed, and the annular portion 520 is circumferentially rotated while keeping in contact with the outer surface of the middle portion 510. As described above, when a mixture of raw materials for producing filaments is ejected through the ejection ports 510a and 520a while rotating the annular portion 520a, a dental care product as illustrated in FIG. 10, in which the monofilaments are adhesively fixed to each other is obtained. Specifically, a mixture in the form of filaments is ejected through the ejection ports 510a of the middle portion 510. Concurrently, a mixture in the form of filaments is ejected through the ejection ports 520a of the annular portion 520. The filaments to be ejected through the ejection ports 520a of the annular portion 520 are formed to cross the filaments to be ejected through the ejection ports 510a of the middle portion 510, because the annular portion 520 is rotated. Thus, a dental care product as illustrated in FIG. 10, in which the monofilaments are adhesively fixed to each other is obtained.

The specification discloses the aforementioned techniques. The following is a summary of the main techniques.

An aspect of the invention is directed to an edible monofilament for use in producing a dental care product for pets, wherein the monofilament has a linear diameter of from 0.3 to 4.0 mm, and an elastic strain of from 20 to 250 %, the elastic strain representing elongation of the monofilament when the monofilament is pull in a length direction thereof.

The inventive edible monofilament (hereinafter, also simply called as a monofilament) has a linear diameter of from 0.3 to 4.0 mm. Therefore, the monofilament having such a small linear diameter easily reaches the roots of teeth or the gaps between the teeth when pets chew a dental care product for pets (hereinafter, also simply called as a dental care product). This makes it easy to remove dental plaque from the roots of teeth and from the gaps between the teeth. The monofilament is stretched when the teeth go into the gaps between the strands of the monofilament. However, the inventive monofilament has an elastic strain of from 20 to 250 %, wherein the elastic strain represents elongation when the monofilament is pull in the length direction thereof (hereinafter, also simply called as an elastic strain). Therefore, the monofilament is stretched when the teeth go into the gaps between the strands of the monofilament, and dental plaque is removed, as the monofilament is deformed to follow the contours of the surfaces of the teeth. Further, even when the gaps are expanded, the monofilament is restored to the original size when the teeth come out of the gaps. When the teeth come out of the gaps, the monofilament is restored to the original size, and at the same time, the gaps between the strands of the monofilament are narrowed to follow the contours of the teeth coming out of the gaps. According to this configuration, the surfaces of the teeth coming out of the gaps between the strands of the monofilament are rubbed by the monofilament defining the gaps, and dental plaque is removed. Further, since the elastic strain of the monofilament is from 20 to 250 %, the monofilament is soft, and is less likely to harm the gums.

In the aforementioned configuration, preferably, the edible monofilament may have a tensile strength of from 2 to 50 MPa in the length direction thereof.

As far as the inventive monofilament has a tensile strength in the length direction (hereinafter, also simply called as a tensile strength) of from 2 to 50 MPa, the monofilament is less likely to be ruptured even if the teeth instantaneously go into the gaps between the strands of the monofilament, and a large load is applied to the monofilament. This makes it possible to use a dental care product produced by using the monofilament for a long period of time, and makes it possible to sufficiently remove dental plaque from pets.

In the aforementioned configuration, preferably, the edible monofilament may have a dental score of not smaller than 500 MPa*%, the dental score being obtained by multiplying the elastic strain with the tensile strength.

When the dental score obtained by multiplying the elastic strain with the tensile strength (hereinafter, also simply called as a dental score) is not smaller than 500 MP*%, the monofilament has good balance between the elastic strain and the tensile strength.

In the aforementioned configuration, preferably, the edible monofilament may contain glycerin of from 0.3 to 40 % by mass, gelatin of from 5 to 80 % by mass, and water content of from 5 to 40 % by mass.

According to the aforementioned configuration, the linear diameter is from 0.3 to 4.0 mm, and the elastic strain is from 20 to 250 %. This makes it easy to obtain a dental care product having an enhanced performance of removing dental plaque. Further, according to the aforementioned configuration, it is easy to handle the raw materials by e.g. an extruder. This is advantageous in enhancing the feasibility in production.

A dental care product for pets according to another aspect of the invention is a dental care product for pets produced by using the edible monofilament.

The inventive dental care product for pets is produced by using the edible monofilament. Therefore, the inventive dental care product is advantageous in that it is less likely to harm the gums of pets, and it is possible to remove dental plaque not only when the teeth go into the gaps between the strands of the monofilament, but also when the teeth come out of the gaps.

### EXAMPLES

In the following, the inventive monofilament is described in details by way of examples. It should be noted that the inventive monofilament is not limited by the following examples.

### <Example 1>

As raw materials, glycerin of 450 parts by mass, starch (trade name: Matsunorin S-10 by Matsutani Chemical Industry Co., Ltd.) of 350 parts by mass, gelatin (gelatin MRK by Nitta Gelatin Inc.) of 1,800 parts by mass, water of 400 parts by mass, and conditioned sugar of 150 parts by mass were mixed into a homogeneous state by using a silent cutter. Thereafter, the raw materials were kneaded by using a single screw extruder (MS 160 by Sanki Seisakusho), and by rotating a screw at 60 rpm at a temperature of 85 °C. The obtained mixture was ejected into a monofilament. When the monofilament was ejected, the monofilament was wound into a bobbin while being pull as necessary, thereby adjusting the linear diameter of the monofilament. The roll of monofilament was packed in a gas-barrier package, and stored for one week. The linear diameter of the monofilament measured after the storage was 0.33 mm, the elastic strain thereof was 50 %, the tensile strength thereof was 11.0 MPa, and the dental score thereof was 550 MPa*%. Further, the maximum load required for rupture was 1.0 N.

The linear diameter was measured by using a pair of vernier calipers (SR-44 by Mitsutoyo). The elastic strain, the tensile strength, and the maximum load were measured by using a universal material testing machine (Instron 5581 by Instron Japan Co., Ltd.) The physical properties were calculated by preparing five samples, measuring the physical properties of each sample, and by obtaining an average of the measurement results.

Forty-eight filaments obtained as described above were braided by round braiding with use of an automatic braiding machine (L-48 by Kokubun Limited), and a dental care product having the shape as illustrated in FIG. 6 was produced. The dental care product was chewed by dogs (poodles (2 years old, male), and miniature schnauzer (8 years old, male)), whose teeth were colored with stain (dent liquid plaque tester-AR by Lion Corporation) for four days, morning and evening each one time until the dogs completely ate the dental care product. The degree of stain was evaluated on the basis of the following evaluation criteria. The result is illustrated in Table 2.

### (Evaluation criteria)

Ⓞ: The stain was almost completely removed in the entirety including the roots of teeth and the gaps between the teeth.
○: A slight amount of stain remained in the roots of teeth and in the gaps between the teeth, but as a whole, substantially all the stain was removed.
Δ: The stain remained in the roots of teeth and in the gaps between the teeth to some extent, but as a whole, stain was largely removed.
×: The stain remained largely in the entirety including the roots of teeth and the gaps between the teeth.

### <Examples 2 to 10 and Comparative Examples 1 to 4>

Monofilaments were produced by the same method as applied in Example 1 except that the used materials were as illustrated in Table 1, and the linear diameters were adjusted to the ones illustrated in Table 1 by adjusting the speed of winding the ejected monofilaments into a bobbin. Table 2 illustrates the physical properties and the evaluation results of the obtained monofilaments.

**[Table 1]**

| | CEx1 | CEx2 | Ex1 | Ex2 | Ex3 | Ex4 | Ex5 | Ex6 | Ex7 | Ex8 | Ex9 | Ex10 | CEx3 | CEx4 |
|---|---|---|---|---|---|---|---|---|---|---|---|---|---|---|
| glycerin | 450 | 450 | 450 | 550 | 450 | 450 | 450 | 450 | 450 | 350 | 250 | 250 | 250 | 150 |
| | (14.3%) | (14.3%) | (14.3%) | (16.9%) | (14.3%) | (14.3%) | (14.3%) | (14.3%) | (14.3%) | (11.5%) | (8.5%) | (8.8%) | (10.9%) | (9.7%) |
| gelatin | 1800 | 1800 | 1800 | 1500 | 1500 | 1500 | 1200 | 1200 | 900 | 1500 | 1500 | 1500 | 1200 | 1000 |
| | (57.1%) | (57.1%) | (57.1%) | (46.2%) | (47.6%) | (47.6%) | (38.1%) | (38.1%) | (28.6%) | (49.2%) | (50.8%) | (52.6%) | (52.2%) | (64.5%) |
| conditioned water | 400 | 400 | 400 | 400 | 400 | 400 | 400 | 400 | 400 | 400 | 400 | 300 | 400 | 400 |
| | (12.7%) | (12.7%) | (12.7%) | (12.3%) | (12.7%) | (12.7%) | (12.7%) | (12.7%) | (12.7%) | (13.1%) | (13.6%) | (10.5%) | (17.4%) | (25.8%) |
| starch | 350 | 350 | 350 | 650 | 650 | 450 | 950 | 950 | 1250 | 650 | 650 | 650 | 250 | - |
| | (11.1%) | (11.1%) | (11.1%) | (20.0%) | (20.6%) | (14.3%) | (30.2%) | (30.2%) | (39.7%) | (21.3%) | (22.0%) | (22.8%) | (10.9%) | - |
| skimmed milk | - | - | - | - | - | 200 | - | - | - | - | - | - | 100 | - |
| conditioned sugar | 150 | 150 | 150 | 150 | 150 | - | 150 | 150 | 150 | 150 | 150 | 150 | - | - |
| sorbitol | - | - | - | - | - | 150 | - | - | - | - | - | - | - | - |
| granulated sugar | - | - | - | - | - | - | - | - | - | - | - | - | 100 | - |
| total | 3150 | 3150 | 3150 | 3250 | 3150 | 3150 | 3150 | 3150 | 3150 | 3050 | 2950 | 2850 | 2300 | 1550 |
| (parts by mass) | | | | | | | | | | | | | | |

**[Table 2]**

| | linear diameter (mm) | maximum load (N) | tensile strength (MPa) | elastic strain (%) | dental score (MPa*%) | evaluation result |
|---|---|---|---|---|---|---|
| CEx1 | 0.13 | 0.3 | 24.0 | 7.5 | 180 | × |
| CEx2 | 0.25 | 0.7 | 14.3 | 22 | 315 | × |
| Ex1 | 0.33 | 1.0 | 11.0 | 50 | 550 | ○ |
| Ex2 | 0.65 | 3.6 | 11.0 | 90 | 990 | ○ |
| Ex3 | 0.78 | 4.2 | 8.7 | 140 | 1222 | ⊚ |
| Ex4 | 0.83 | 5.0 | 9.2 | 135 | 1247 | ⊚ |
| Ex5 | 0.94 | 6.2 | 8.9 | 140 | 1252 | ⊚ |
| Ex6 | 1.01 | 7.0 | 8.7 | 130 | 1131 | ○ |
| Ex7 | 1.14 | 8.8 | 8.6 | 110 | 946 | ○ |
| Ex8 | 1.36 | 11.0 | 7.6 | 100 | 760 | Δ |
| Ex9 | 2.66 | 15.9 | 2.9 | 90 | 257 | Δ |
| Ex10 | 3.25 | 23.3 | 2.8 | 80 | 225 | Δ |
| CEx3 | 4.12 | 35.1 | 2.6 | 110 | 289 | × |
| CEx4 | 7.00 | 84.6 | 2.2 | 125 | 275 | × |

### <Examples 11 to 19 and Comparative Examples 5 to 7>

Monofilaments were produced by the same method as applied in Example 1 except that the used materials were as illustrated in Table 3, and the linear diameters were adjusted to the ones illustrated in Table 1 by adjusting the speed of winding the ejected monofilaments into a bobbin. Table 4 illustrates the physical properties and the evaluation results of the obtained monofilaments.

In Table 3, gelatin is gelatin MRK by Nitta Gelatin, corn starch is corn starch by Nihon CornStarch Corporation, tapioca starch derivative is GELPRO A10 by General Starch Limited, dried collagen is DMF C-60 by Meisho Co., Ltd., strong cheese is strong cheddar cheese by Dairy Gold Food Ltd., and water includes ice. Further, the numerical values illustrated in Table 3 indicate parts by mass, and % indicates % by mass.

**[Table 3]**

| | | Example | | | | | | | | | Comparative example | | |
|---|---|---|---|---|---|---|---|---|---|---|---|---|---|
| | | 11 | 12 | 13 | 14 | 15 | 16 | 17 | 18 | 19 | 5 | 6 | 7 |
| glycerin | | 50 | 50 | 50 | 70 | 90 | 110 | 130 | 30 | 10 | 50 | 50 | 50 |
| | | 2.2% | 2.2% | 2.2% | 3.1% | 4.0% | 4.9% | 5.8% | 1.3% | 0.4% | 2.2% | 2.2% | 2.2% |
| gelatin | | 800 | 600 | 1000 | 800 | 800 | 800 | 800 | 800 | 800 | 400 | 200 | 1200 |
| | | 35.7% | 26.8% | 44.6% | 35.7% | 35.7% | 35.7% | 35.7% | 35.7% | 35.7% | 17.9% | 8.9% | 53.6% |
| water | | 450 | 450 | 450 | 430 | 410 | 390 | 370 | 470 | 490 | 450 | 450 | 450 |
| | | 20.1% | 20.1% | 20.1% | 19.2% | 18.3% | 17.4% | 16.5% | 21.0% | 21.9% | 20.1% | 20.1% | 20.1% |
| starch | corn starch | 500 | 700 | 300 | 500 | 500 | 500 | 500 | 500 | 500 | 900 | 1100 | 100 |
| | | 22.3% | 31.3% | 13.4% | 22.3% | 22.3% | 22.3% | 22.3% | 22.3% | 22.3% | 40.2% | 49.1% | 4.5% |
| | tapioca starch derivative | 100 | 100 | 100 | 100 | 100 | 100 | 100 | 100 | 100 | 100 | 100 | 100 |
| | | 4.5% | 4.5% | 4.5% | 4.5% | 4.5% | 4.5% | 4.5% | 4.5% | 4.5% | 4.5% | 4.5% | 4.5% |
| | total | 600 | 800 | 400 | 600 | 600 | 600 | 600 | 600 | 600 | 1000 | 1200 | 200 |
| | | 26.8% | 35.7% | 17.9% | 26.8% | 26.8% | 26.8% | 26.8% | 26.8% | 26.8% | 44.6% | 53.6% | 8.9% |
| dried collagen | | 120 | 120 | 120 | 120 | 120 | 120 | 120 | 120 | 120 | 120 | 120 | 120 |
| | | 5.4% | 5.4% | 5.4% | 5.4% | 5.4% | 5.4% | 5.4% | 5.4% | 5.4% | 5.4% | 5.4% | 5.4% |
| strong cheese | | 150 | 150 | 150 | 150 | 150 | 150 | 150 | 150 | 150 | 150 | 150 | 150 |
| sodium glutamate | | 70 | 70 | 70 | 70 | 70 | 70 | 70 | 70 | 70 | 70 | 70 | 70 |
| total | | 2240 | 2240 | 2240 | 2240 | 2240 | 2240 | 2240 | 2240 | 2240 | 2240 | 2240 | 2240 |

**[Table 4]**

| | linear diameter (mm) | tensile strength (MPa) | elastic strain (%) | dental score (MPa*%) | evaluation result |
|---|---|---|---|---|---|
| Ex11 | | 6.4 | 81 | 522 | ○ |
| Ex12 | | 5.3 | 35 | 184 | Δ |
| Ex13 | | 4.6 | 108 | 501 | ○ |
| Ex14 | | 9.7 | 141 | 1366 | Ⓞ |
| Ex15 | 1.3 | 6.2 | 104 | 643 | ○ |
| Ex16 | | 4.6 | 94 | 436 | O |
| Ex17 | | 4.3 | 121 | 519 | ○ |
| Ex18 | | 7.1 | 51 | 357 | Δ |
| Ex19 | | 7.7 | 46 | 354 | Δ |
| CEx5 | | 4.5 | 8 | 37 | × |
| CEx6 | 1.3 | 2 | 9 | 18 | × |
| CEx7 | | 10.4 | 287 | 2994 | × |

As illustrated in Table 2 and Table 4, the dental care products produced by using the monofilaments obtained in Examples 1 to 19, in which the linear diameter was from 0.3 to 4.0 mm, and the elastic strain was from 20 to 250 % have advantageous effects of removing stain from the teeth of dogs. Among the examples, the dental care products produced by using the monofilaments obtained in Examples 3 to 5, in which the linear diameter was not smaller than 0.75 mm but smaller than 1.0 mm have particularly advantageous effects of removing stain from the teeth of dogs. Further, the dental care products produced by using the monofilaments obtained in Examples 13 to 15, and 17, in which the elastic strain was from 100 to 250 % have advantageous effects of removing stain from the teeth of dogs.

On the other hand, the dental care products produced by using the monofilaments obtained in Comparative Examples 1 and 2, in which the linear diameter was smaller than 0.3 were ruptured when chewed by the dogs, because the maximum load was small. Thus, it was impossible to perform measurement. Further, the dental care products produced by using the monofilaments obtained in Comparative Examples 3 and 4, in which the linear diameter exceeded 4.0 mm failed to uniformly come into contact with the surfaces of teeth, and stain remained largely in the gaps between the teeth.

Further, the dental care products produced by using the monofilaments obtained in Comparative Examples 5 and 6, in which the elastic strain was smaller than 20 % were such that the monofilaments were less likely to be restored after chewed by the dogs. It was impossible to sufficiently remove stain from the gaps between the teeth. Further, the dental care products were easily ruptured. It was difficult for the dogs to chew the dental care product produced by using the monofilament obtained in Comparative Example 7, in which the elastic strain exceeded 250 %. Even if the dogs could chew, the gums of the dogs were likely to be harmed. The dogs swallowed the dental care product without sufficiently chewing the dental care product. It was impossible to sufficiently remove stain from the gaps between the teeth.

Further, a monofilament was produced by the same method as applied in Example 1 except that as raw materials, glycerin of 50 parts by mass, starch (trade name: Matsunorin M by Matsutani Chemical Industry Co., Ltd.) of 600 parts by mass gelatin (gelatin FGS-260 by Kouei Chemical Co., Ltd.) of 800 parts by mass, water of 450 parts by mass, chlorophyll (chlorella algae by Chlorella Industry Co., Ltd.) of 2.0 parts by mass, phosphorylated oligosaccharides calcium salt (POs-Ca by Ezaki Glico Company, Limited) of 2.5 parts by mass, and Globigen (Globigen PG by EW Nutrition) of 1.0 part by mass were used; and the linear diameter was adjusted to 1.3 mm by adjusting the speed of winding the ejected monofilament into a bobbin. The elastic strain of the obtained monofilament was 80 %, the tensile strength thereof was 6.2 MPa, and the dental score thereof was 496 MPa*%. Further, the maximum load required for rupture was 6.4 N. Further, the dental care product produced by the same method as applied in Example 1 by using the obtained monofilament could properly remove stain from the roots of teeth and from the gaps between the teeth, as well as Example 11. This proves that containing chlorophyll, phosphorylated oligosaccharides calcium salt, and Globigen also makes it possible to obtain a dental care product capable of appropriately removing stain, and further proves that advantageous effects by containing chlorophyll, phosphorylated oligosaccharides calcium salt, and Globigen are provided.

The present application is based on Japanese Patent Application No. 2013-254228 filed on December 9, 2013, the contents of which are hereby incorporated by reference.

Although the present invention has been appropriately and fully described by way of embodiment with reference to the drawings, it is to be appreciated that those skilled in the art can easily change and/or modify the embodiment. Therefore, as far as such modifications or alterations to be implemented by those skilled in the art do not depart from the scope of the invention hereinafter defined, they should be construed as being included therein.

### INDUSTRIAL APPLICABILITY

According to the invention, it is possible to provide an edible monofilament for use in producing a dental care product for pets, which can sufficiently remove dental plaque in a wide oral cavity region with no or less harm of the gums of the pets, and a dental care product for pets produced by using the edible monofilament.

### REFERENCE SIGNS LIST

- 100: Monofilament
- 200: Single screw extruder
- 210: Feeder unit
- 220: Screw unit
- 230: Ejection unit
- 240: Tubular structure
- 300: Dental care product
- 310: Insertion hole
- 400: Tooth
- 400p: Surface
- 410: Gums

## Claims

1. An edible monofilament for use in producing a dental care product for pets, wherein
the monofilament has a linear diameter of from 0.3 to 4.0 mm, and
the monofilament has an elastic strain of from 20 to 250 %, the elastic strain representing elongation of the monofilament when the monofilament is pull in a length direction thereof.

2. The edible monofilament according to claim 1, wherein
the monofilament has a tensile strength of from 2 to 50 MPa in the length direction thereof.

3. The edible monofilament according to claim 2, wherein
the monofilament has a dental score of not smaller than 500 MPa*%, the dental score being obtained by multiplying the elastic strain with the tensile strength.

4. The edible monofilament according to any one of claims 1 to 3, wherein
the monofilament contains glycerin of from 0.3 to 40 % by mass, gelatin of from 5 to 80 % by mass, and water content of from 5 to 40 % by mass.

5. A dental care product for pets produced by using the edible monofilament of any one of claims 1 to 4.
